# EUROPEAN PATENT APPLICATION

(11) **EP 4 773 365 A1**
(43) Date of publication of application: **08.07.2026**
(21) Application number: 24881029.3
(22) Date of filing: 03.06.2024
(51) Int. Cl.: H01M 50/186

(54) **BATTERY CELL, BATTERY, AND ELECTRIC DEVICE**

(30) Priority: 23.10.2023 CN 202322846107 U
(71) Applicant: Contemporary Amperex Technology Co., Limited, Ningde, Fujian 352100 (CN)
(72) Inventor: ZHOU, Wenlin, Ningde, Fujian 352100 (CN); CAI, Runchen, Ningde, Fujian 352100 (CN); XIE, Chengbin, Ningde, Fujian 352100 (CN); LI, Quankun, Ningde, Fujian 352100 (CN); WANG, Peng, Ningde, Fujian 352100 (CN)
(74) Representative: Lorenz Seidler Gossel Part. mbB
(86) International application number: PCT/CN2024/097104
(87) International publication number: WO 2025/086651

(57) **Abstract**

A battery cell (20), a battery (100), and an electric device. The battery cell (20) comprises a casing (210), an electrode assembly (220), electrode terminals (230), and sealing members (240). The casing (210) comprises a first wall (211); through holes (2111) are formed in the first wall (211); the electrode assembly (220) is arranged in the casing (210); the first wall (211) is used for supporting the electrode assembly (220), each electrode terminal (230) is arranged at a corresponding through hole (2111); the electrode terminal (230) comprises a first conductive portion (231); the first conductive portion (231) is arranged on the side of the first wall (211) facing an accommodating space; and each sealing member (240) is arranged between a corresponding electrode terminal (230) and the first wall (211). When the outside of the casing (210) is stressed, the first wall (211) and the electrode terminals (230) can deform together, so that it is not easy to form gaps between the sealing members (240), which are located between the electrode terminals (230) and the first wall (211), and the first wall (211), and between the sealing members (240) and the electrode terminals (230), thereby maintaining good sealing performance between the sealing members (240) and the first wall (211) and between the sealing members (240) and the electrode terminals (230) and reducing the possibility of liquid leakage of the battery cell (20), and thus reducing the possibility of failure of the battery cell (20) and contamination or corrosion of other mechanisms.

## Description

### CROSS-REFERENCE TO RELATED APPLICATIONS

This application claims priority to Chinese Patent Application No. CN202322846107.5 filed on October 23, 2023 and entitled "BATTERY CELL, BATTERY, AND ELECTRIC APPARATUS", which is incorporated herein by reference in its entirety.

### TECHNICAL FIELD

This application relates to the field of battery technologies, and specifically, to a battery cell, a battery, and an electric apparatus.

### BACKGROUND

Energy conservation and emission reduction are crucial to the sustainable development of the automobile industry. Electric vehicles, with their advantages in energy conservation and environmental protection, have become an important part of the sustainable development of the automobile industry. For electric vehicles, battery technologies are an important factor in connection with their development.

In battery technologies, how the sealing performance of battery cells is improved is an urgent technical problem that needs to be solved.

### SUMMARY

Embodiments of this application provide a battery cell, a battery, and an electric apparatus, which can improve the sealing performance of battery cells.

According to a first aspect, this application provides a battery cell, including:
a housing, having an accommodating space, where the housing includes a first wall, and the first wall is provided with a through hole;
an electrode assembly, disposed in the accommodating space, where the first wall is configured to support the electrode assembly;
an electrode terminal, disposed in the through hole, where the electrode terminal includes a first conductive portion, and the first conductive portion is disposed on a side of the first wall facing the accommodating space; and
a sealing member, disposed between the electrode terminal and the first wall.

In the above technical solution, the housing has an accommodating space, and the electrode assembly is disposed in the accommodating space, so that the housing can protect the electrode assembly. The first wall of the housing is provided with a through hole, and the electrode terminal is disposed in the through hole, so that the electrode assembly can be electrically connected to other mechanisms through the electrode terminal. The first conductive portion of the electrode terminal is disposed on a side of the first wall facing the accommodating space, and the sealing member is disposed between the electrode terminal and the first wall. In this way, when the exterior of the housing is subjected to force, the first wall and the electrode terminal can deform together, and the sealing member located between the electrode terminal and the first wall is not prone to have gaps formed with the first wall and with the electrode terminal, thereby allowing the sealing member to maintain good sealing performance with the first wall and with the electrode terminal, reducing the possibility of leakage from the battery cell, and thus reducing the possibility of battery cell failure and pollution or corrosion of other mechanisms.

According to some embodiments of this application, the first conductive portion is provided in a flat-plate shape.

In the above technical solution, the first conductive portion is provided in a flat-plate shape, which can better fit with the sealing member, thereby allowing for better sealing performance between the sealing member and the first conductive portion, further reducing the possibility of leakage from the battery cell, and thus reducing the possibility of battery cell failure and pollution or corrosion of other mechanisms.

According to some embodiments of this application, in a direction perpendicular to a thickness direction of the first wall, a size of the first conductive portion is larger than a size of the through hole.

In the above technical solution, in the direction perpendicular to the thickness direction of the first wall, the size of the first conductive portion is larger than the size of the through hole, so that the first conductive portion can cover the through hole, allowing for better sealing performance between the first conductive portion and the housing, further reducing the possibility of leakage from the battery cell, and thus reducing the possibility of battery cell failure and pollution or corrosion of other mechanisms.

According to some embodiments of this application, in the thickness direction of the first wall, the sealing member is located between the first conductive portion and the first wall.

In the above technical solution, in the thickness direction of the first wall, the sealing member is located between the first conductive portion and the first wall, allowing for larger sealing area between the sealing member and the first conductive portion and/or larger sealing area between the sealing member and the first wall, thereby allowing for better sealing performance between the sealing member and the first conductive portion and/or the first wall. When the first wall is subjected to force, the sealing member is pressed in the thickness direction of the first wall, which can further improve the sealing performance between the first conductive portion and the first wall, thereby further reducing the possibility of leakage from the battery cell, and thus reducing the possibility of battery cell failure and pollution or corrosion of other mechanisms.

According to some embodiments of this application, in the direction perpendicular to the thickness direction of the first wall, a distance between a sidewall of the through hole and a sidewall of the first conductive portion is D1, satisfying D1 ≥ 2 mm.

In the above technical solution, the distance D1 between a sidewall of the through hole and a sidewall of the first conductive portion in the direction perpendicular to the thickness direction of the first wall is made to satisfy D1 ≥ 2 mm, so that the first conductive portion can better cover the through hole, allowing for better sealing performance between the first conductive portion and the first wall. In the thickness direction of the first wall, an overlapping area of a projection of the first conductive portion and a projection of the first wall is large, which facilitates the disposition of the sealing member between the electrode terminal and the first wall.

According to some embodiments of this application, in the thickness direction of the first wall, a thickness of the first conductive portion is H1, satisfying H1 ≥ 1 mm.

In the above technical solution, the thickness H1 of the first conductive portion in the thickness direction of the first wall is made to satisfy H1 ≥ 1 mm, so that the first conductive portion is not prone to deformation and gaps are not prone to be formed between the first conductive portion and the sealing member, maintaining good sealing performance between the sealing member and the first conductive portion, reducing the possibility of leakage from the battery cell, and thus reducing the possibility of battery cell failure and pollution or corrosion of other mechanisms.

According to some embodiments of this application, the electrode terminal further includes a second conductive portion, where the second conductive portion is connected to the first conductive portion, and the second conductive portion is disposed through the through hole.

In the above technical solution, the electrode terminal further includes a second conductive portion, where the second conductive portion is connected to the first conductive portion, and the second conductive portion is disposed through the through hole. In this way, a portion of the second conductive portion is exposed on a side of the first wall facing away from the accommodating space, thereby facilitating connection of other mechanisms to the second conductive portion to achieve electrical connection with the electrode assembly.

According to some embodiments of this application, the battery cell further includes a connecting member, where the connecting member connects the first conductive portion and the first wall.

In the above technical solution, since the second conductive portion is disposed through the through hole, when the battery cell is subjected to collision, the second conductive portion may be directly subjected to force. With the disposition of the connecting member and the connecting member connecting the first conductive portion and the first wall, when the second conductive portion is subjected to force, the external force can be transmitted to the first wall through the connecting member, so that the first wall can deform together with the second conductive portion, and the sealing member located between the electrode terminal and the first wall is not prone to have gaps formed with the first wall and the electrode terminal, thereby allowing the sealing member to maintain good sealing performance with the first wall and with the electrode terminal, reducing the possibility of leakage from the battery cell, and thus reducing the possibility of battery cell failure and pollution or corrosion of other mechanisms.

According to some embodiments of this application, in the thickness direction of the first wall, the connecting member is located between the first conductive portion and the first wall.

In the above technical solution, since the sealing member is disposed between the first conductive portion and the first wall, there is a gap space between the first conductive portion and the first wall. In the thickness direction of the first wall, the connecting member is located between the first conductive portion and the first wall, that is, the connecting member can be disposed in the gap space that already exists, thereby making the space occupied by the overall structure composed of the electrode terminal, the sealing member, and the connecting member smaller, so that more space in the accommodating space can be used for accommodating the electrode assembly, which helps enhancing the energy density of the battery cell.

According to some embodiments of this application, the connecting member is disposed around the sealing member.

In the above technical solution, the connecting member is disposed around the sealing member, that is, the connecting member is closer to the outer side of the first conductive portion in the direction perpendicular to the thickness direction of the first wall. When directly subjected to force, the electrode terminal acts on the first wall through the connecting member, so that the first wall deforms to a smaller extent, thereby making the possibility of gaps formed between the first wall and the sealing member as well as between the electrode terminal and the sealing member due to deformation smaller, and allowing for better sealing performance between the first wall and the sealing member as well as between the electrode terminal and the sealing member.

According to some embodiments of this application, in the thickness direction of the first wall, the second conductive portion exceeds a side of the first wall facing away from the accommodating space.

In the above technical solution, in the thickness direction of the first wall, the second conductive portion exceeds the side of the first wall facing away from the accommodating space, which can further facilitate connection of other mechanisms to the second conductive portion to achieve electrical connection with the electrode assembly.

According to some embodiments of this application, the electrode terminal further includes a third conductive portion, where the third conductive portion is disposed on the side of the first wall facing away from the accommodating space, and the third conductive portion is connected to the second conductive portion.

In the above technical solution, the electrode terminal further includes a third conductive portion, where the third conductive portion is disposed on the side of the first wall facing away from the accommodating space, and the third conductive portion is connected to the second conductive portion, which can facilitate connection of other mechanisms to the third conductive portion to achieve electrical connection with the electrode assembly.

According to some embodiments of this application, in the direction perpendicular to the thickness direction of the first wall, a size of the third conductive portion is larger than the size of the through hole.

In the above technical solution, in the direction perpendicular to the thickness direction of the first wall, the size of the third conductive portion is larger than the size of the through hole, so that the third conductive portion can cover the through hole, thereby allowing for better sealing performance between the third conductive portion and the housing, further reducing the possibility of leakage from the battery cell, and thus reducing the possibility of battery cell failure and pollution or corrosion of other mechanisms. The third conductive portion can abut against and limit the first wall in the thickness direction of the first wall, so that the first conductive portion can press the sealing member in the thickness direction of the first wall, which can further improve the sealing performance between the first conductive portion and the first wall, thereby further reducing the possibility of leakage from the battery cell, and thus reducing the possibility of battery cell failure and pollution or corrosion of other mechanisms.

According to some embodiments of this application, in the direction perpendicular to the thickness direction of the first wall, a distance between the sidewall of the through hole and a sidewall of the third conductive portion is D2, satisfying D2 ≥ 1 mm.

In the above technical solution, the distance D2 between the sidewall of the through hole and the sidewall of the third conductive portion in the direction perpendicular to the thickness direction of the first wall is made to satisfy D2 ≥ 1 mm, so that the third conductive portion can better cover the through hole, making the sealing performance between the third conductive portion and the first wall better.

According to some embodiments of this application, in the thickness direction of the first wall, a thickness of the third conductive portion is H2, satisfying H2 ≥ 1 mm.

In the above technical solution, the thickness H2 of the third conductive portion in the thickness direction of the first wall is made to satisfy H2 ≥ 1 mm, so that the third conductive portion is not prone to deformation and gaps are not prone to be formed between the third conductive portion and the first wall, maintaining good sealing performance between the first wall and the first conductive portion, reducing the possibility of leakage from the battery cell, and thus reducing the possibility of battery cell failure and pollution or corrosion of other mechanisms.

According to some embodiments of this application, in the thickness direction of the first wall, the sealing member is in interference fit with the first conductive portion and the first wall.

In the above technical solution, the sealing member is made to be in interference fit with the first conductive portion and the first wall in the thickness direction of the first wall, so that the sealing member can have better sealing performance with the first conductive portion and with the first wall, further reducing the possibility of leakage from the battery cell, and thus reducing the possibility of battery cell failure and pollution or corrosion of other mechanisms.

According to some embodiments of this application, the electrode terminal is provided with a limiting portion, and the first wall is provided with a matching portion, where the limiting portion fits with the matching portion to limit movement of the electrode terminal relative to the first wall along the direction perpendicular to the thickness direction of the first wall.

In the above technical solution, the electrode terminal is provided with the limiting portion, the first wall is provided with the matching portion, and the limiting portion fits with the matching portion, so that movement of the electrode terminal relative to the first wall along the direction perpendicular to the thickness direction of the first wall can be limited. In this way, when the electrode terminal or the first wall is subjected to force, the electrode terminal is not prone to move relative to the first wall, thereby maintaining good sealing performance between the electrode terminal and the first wall. When subjected to force in its thickness direction, the first wall deforms, causing the sidewalls of the through hole to move away from each other. With the limiting portion and the matching portion provided, when the sidewalls of the through hole move away from each other, the electrode terminal can generate a pulling force on the first wall in the direction perpendicular to the thickness direction of the first wall, so that the first wall deforms to a smaller extent, thereby reducing the possibility of gaps formed between the first wall and the electrode terminal due to deformation, and further improving the sealing performance between the first wall and the electrode terminal.

According to some embodiments of this application, one of the limiting portion and the matching portion is a protrusion, and the other is a depression.

In the above technical solution, one of the limiting portion and the matching portion is a protrusion, and the other is a depression, which allows for a simple structure, easy preparation, and good limiting effect.

According to some embodiments of this application, the housing includes a housing body and an end cover, where the housing body has an opening, the end cover closes the opening, and the first wall is the end cover.

In the above technical solution, the housing includes a housing body and an end cover, where the housing body has an opening, the end cover closes the opening, and the first wall is the end cover, facilitating the preparation of the through hole.

According to a second aspect, this application provides a battery, including the battery cell described in any one of the foregoing solutions.

According to a third aspect, this application provides an electric apparatus, including the battery described in any one of the foregoing solutions, where the battery is configured to supply electrical energy.

### BRIEF DESCRIPTION OF THE DRAWINGS

To describe the technical solutions in the embodiments of this application more clearly, the following briefly describes the accompanying drawings required for describing the embodiments of this application. It should be understood that the following drawings show merely some embodiments of this application and thus should not be considered as limitations on the scope. Persons of ordinary skill in the art may still derive other drawings from these accompanying drawings without creative efforts.
FIG. 1 is a schematic structural diagram of a vehicle according to some embodiments of this application.
FIG. 2 is an exploded structural view of a battery according to some embodiments of this application.
FIG. 3 is an exploded structural view of a battery cell according to some embodiments of this application from a perspective.
FIG. 4 is a schematic structural diagram of a battery cell from a perspective according to some embodiments of this application.
FIG. 5 is a sectional view of a partial structure of the battery cell in FIG. 4 along A-A.
FIG. 6 is a sectional view of a partial structure of a battery cell according to some embodiments of this application.
FIG. 7 is a sectional view of a partial structure of a battery cell according to some other embodiments of this application.
FIG. 8 is a schematic diagram of a partially enlarged structure at location B in the battery cell in FIG. 5.
FIG. 9 is a sectional view of a partial structure of a battery cell according to some other embodiments of this application.

Reference signs: 1000: vehicle; 100: battery; 10: box; 110: first box body; 120: second box body; 20: battery cell; 210: housing; 211: first wall; 2111: through hole; 2112: protrusion; 212: housing body; 220: electrode assembly; 230: electrode terminal; 231: first conductive portion; 232: second conductive portion; 233: third conductive portion; 2331: depression; 240: sealing member; 250: connecting member; 200: controller; 300: motor; X: thickness direction of the first wall; Y: length direction of the first wall; and Z: width direction of the first wall.

### DESCRIPTION OF EMBODIMENTS

To make the objectives, technical solutions, and advantages of the embodiments of this application clearer, the following clearly describes the technical solutions in the embodiments of this application with reference to the accompanying drawings in the embodiments of this application. Apparently, the embodiments described are some rather than all embodiments of this application. All other embodiments obtained by persons of ordinary skill in the art based on the embodiments of this application without creative efforts shall fall within the protection scope of this application.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions.

In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments.

In the description of this application, it should be noted that unless otherwise specified and defined explicitly, the terms "mounting", "connection", "join", and "attachment" should be understood in their general senses. For example, they may refer to a fixed connection, a detachable connection, or an integral connection, and may refer to a direct connection, an indirect connection via an intermediate medium, or an internal communication between two elements.

The battery cell in this application may include a lithium-ion secondary battery, a lithium-ion primary battery, a lithium-sulfur battery, a sodium-ion battery, a magnesium-ion battery, or the like. This is not limited in the embodiments of this application. The battery cell may be flat, cuboid, or of other shapes. This is not limited in the embodiments of this application either.

The battery mentioned in the embodiments of this application is a single physical module that includes multiple battery cells for providing a higher voltage and capacity. For example, the battery mentioned in this application may include a battery module, a battery pack, or the like. The battery typically may further include a box configured to enclose one or more battery cells or multiple battery modules. The box can prevent fluids or other foreign matter from affecting charging or discharging of the battery cell.

A battery cell includes an electrode assembly and an electrolyte. The electrode assembly includes a positive electrode plate, a negative electrode plate, and a separator. Working of the battery cell mainly relies on migration of metal ions between the positive electrode plate and the negative electrode plate. The positive electrode plate includes a positive electrode current collector and a positive electrode active substance layer. The positive electrode active substance layer is applied on a surface of the positive electrode current collector. The part of the current collector uncoated with the positive electrode active substance layer serves as a positive electrode tab. A lithium-ion battery is used as an example, for which, the positive electrode current collector may be made of aluminum and the positive electrode active substance may be lithium cobalt oxide, lithium iron phosphate, ternary lithium, lithium manganate, or the like. The negative electrode plate includes a negative electrode current collector and a negative electrode active substance layer. The negative electrode active substance layer is applied on a surface of the negative electrode current collector. The part of the current collector uncoated with the negative electrode active substance layer serves as a negative electrode tab. The negative electrode current collector may be made of copper, and the negative electrode active substance may be carbon, silicon, or the like. To allow a high current to pass through without any fusing, multiple positive electrode tabs are provided and stacked together, and multiple negative electrode tabs are provided and stacked together. The separator may be made of PP (polypropylene, polypropylene), PE (polyethylene, polyethylene), or the like.

Batteries have outstanding advantages such as high energy density, low environmental pollution, high power density, long service life, wide application, and low self-discharge rate, and are an important part of the development of new energies nowadays. With the development of the new energy industry, batteries are gradually developing towards larger size and integration.

A housing of a battery cell is generally provided with an electrode terminal, so that an electrode assembly can be electrically connected to other mechanisms through the electrode terminal, and the electrode terminal is sealingly connected to the housing. However, during use of the battery cell, the housing is prone to deformation due to external force, which in turn easily leads to sealing failure between the housing and the electrode terminal and causes electrolyte leakage, thereby leading to battery cell failure and pollution or corrosion of other mechanisms. Particularly, for a battery cell with an inverted electrode terminal, that is, the electrode terminal is disposed on the bottom wall of the housing, the wall where the electrode terminal is located is more prone to external force, thereby causing deformation of the wall where the electrode terminal is located, and sealing failure between the housing and the electrode terminal.

Based on the above considerations, this application provides a battery cell. The battery cell includes a housing, an electrode assembly, an electrode terminal, and a sealing member. The housing has an accommodating space and includes a first wall. The first wall is provided with a through hole. The electrode assembly is disposed in the accommodating space. The first wall is configured to support the electrode assembly. The electrode terminal is disposed in the through hole. The electrode terminal includes a first conductive portion, where the first conductive portion is disposed on a side of the first wall facing the accommodating space. The sealing member is disposed between the electrode terminal and the first wall.

In the technical solutions of this application, the housing has an accommodating space, and the electrode assembly is disposed in the accommodating space, so that the housing can protect the electrode assembly. The first wall of the housing is provided with a through hole, and the electrode terminal is disposed at the through hole, so that the electrode assembly can be electrically connected to other mechanisms through the electrode terminal. The first conductive portion of the electrode terminal is disposed on a side of the first wall facing the accommodating space, and the sealing member is disposed between the electrode terminal and the first wall. In this way, when the exterior of the housing is subjected to force, the first wall and the electrode terminal can deform together, and the sealing member located between the electrode terminal and the first wall is not prone to have gaps formed with the first wall and with the electrode terminal, thereby allowing the sealing member to maintain good sealing performance with the first wall and with the electrode terminal, reducing the possibility of leakage from the battery cell, and thus reducing the possibility of battery cell failure and pollution or corrosion of other mechanisms.

The battery disclosed in the embodiments of this application may be used without limitation in an electric apparatus such as a vehicle, a ship, or an aircraft. A power system of the electric apparatus can include the battery disclosed in this application.

Embodiments of this application provide an electric apparatus that uses a battery as a power source. The electric apparatus may be but is not limited to an electric tool, an electric bicycle, an electric car, a ship, or a spacecraft. The spacecraft may include an airplane, a rocket, a space shuttle, a spaceship, and the like.

The battery described in the embodiments of this application is applicable to not only the electric apparatuses described above, but also all electric apparatuses using batteries. However, for brevity of description, in the following embodiments, an electric apparatus being a vehicle is used as an example for description.

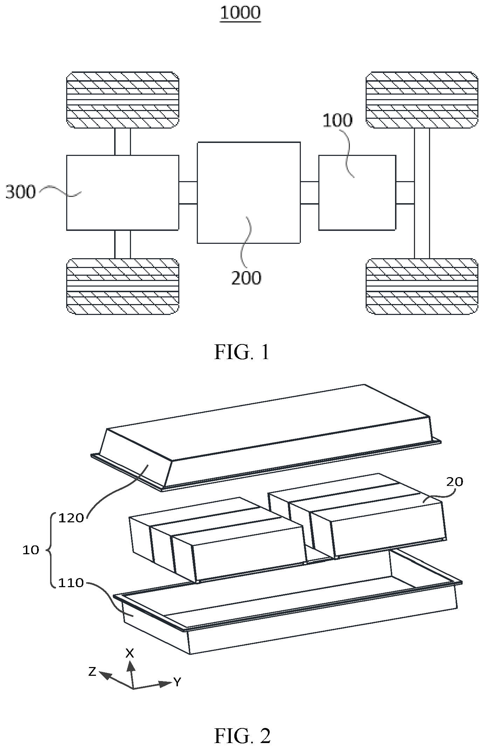

Referring to FIG. 1, FIG. 1 is a schematic structural diagram of a vehicle according to some embodiments of this application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front or rear of the vehicle 1000. The battery 100 may be configured to supply power to the vehicle 1000. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of this application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded structural view of a battery according to some embodiments of this application. The battery 100 includes a box 10 and a battery cell 20, where the battery cell 20 is accommodated in the box 10. The box 10 is configured to provide an accommodating space for the battery cell 20. The box 10 may be a variety of structures. In some embodiments, the box 10 may include a first box body 110 and a second box body 120. The first box body 110 and the second box body 120 fit together with one covering another. The first box body 110 and the second box body 120 jointly define an accommodating space for accommodating the battery cell 20. The first box body 110 may be a hollow structure with one end open, the second box body 120 may be a plate structure, and the second box body 120 covers an opening side of the first box body 110, so that the first box body 110 and the second box body 120 jointly define an accommodating space. The first box body 110 and the second box body 120 may both be a hollow structure with one side open, and the opening side of the second box body 120 covers the opening side of the first box body 110.

In some embodiments, the box 10 may be cuboid.

In some other embodiments, the box 10 may alternatively be a cylindrical structure.

In some embodiments, the box 10 may be made of aluminum, aluminum alloy, or other metal materials, so that the box 10 has high force-bearing performance.

In some other embodiments, the box 10 may alternatively be made of non-metal materials with high strength such as carbon fiber or hard plastic.

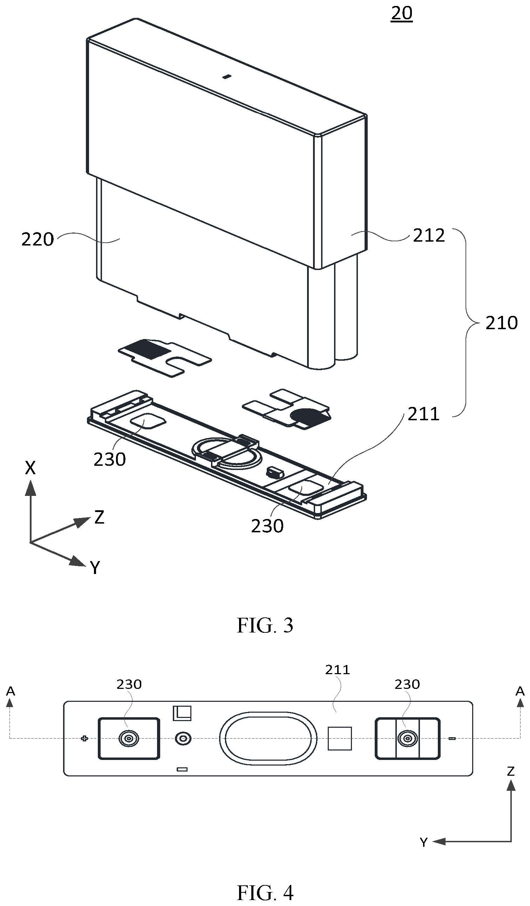

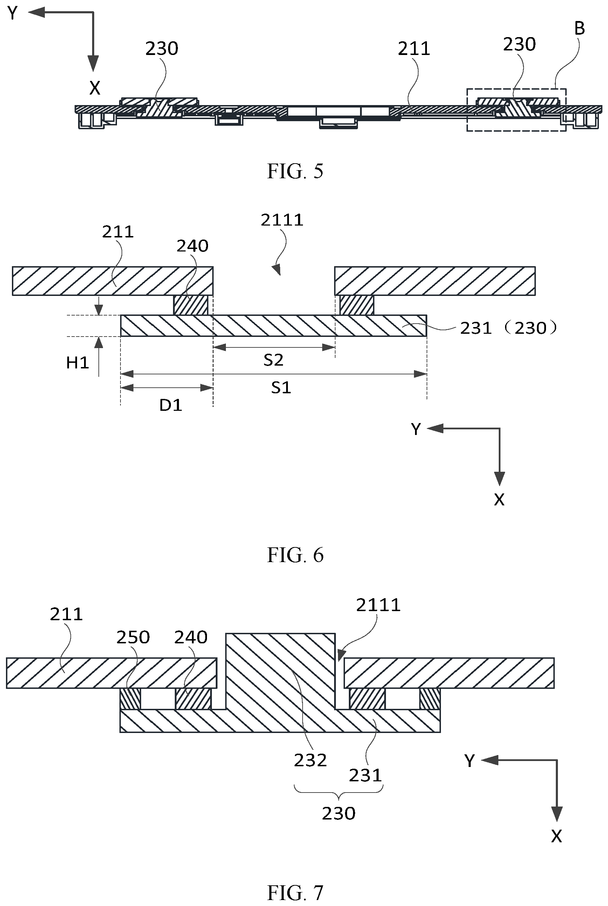

Referring to FIG. 3 to FIG. 6, FIG. 3 is an exploded structural view of a battery cell according to some embodiments of this application, FIG. 4 is a schematic structural diagram of a battery cell from a perspective according to some embodiments of this application, FIG. 5 is a sectional view of a partial structure of the battery cell in FIG. 4 along A-A, and FIG. 6 is a sectional view of a partial structure of a battery cell according to some embodiments of this application.

Some embodiments of this application provide a battery cell 20, where the battery cell 20 includes a housing 210, an electrode assembly 220, an electrode terminal 230, and a sealing member 240. The housing 210 has an accommodating space and includes a first wall 211. The first wall 211 is provided with a through hole 2111. The electrode assembly 220 is disposed in the accommodating space. The first wall 211 is configured to support the electrode assembly 220. The electrode terminal 230 is disposed in the through hole 2111. The electrode terminal 230 includes a first conductive portion 231, where the first conductive portion 231 is disposed on a side of the first wall 211 facing the accommodating space. The sealing member 240 is disposed between the electrode terminal 230 and the first wall 211.

In some embodiments, the battery cell 20 may be cuboid, so that multiple battery cells 20 can be arranged closely in a matrix, which helps enhance the energy density of the battery 100.

In some other embodiments, the battery cell 20 may alternatively be flat, cylindrical, or of other shapes.

In some embodiments, multiple battery cells 20 of the battery 100 may be connected in series, parallel, or series-parallel, where being connected in series-parallel means a combination of series and parallel connections of the multiple battery cells 20. The multiple battery cells 20 may be directly connected in series, parallel, or series-parallel, and then a battery cell group composed of the multiple battery cells 20 is accommodated in the box 10. Certainly, the battery cell group may be formed by multiple battery cells 20 being connected in series, parallel, or series-parallel to form a battery cell group module, and then multiple battery cell group modules being connected in series, parallel, or series-parallel to form an entirety which is accommodated in the box 10. The battery 100 may further include other structures. For example, the battery 100 may further include a busbar configured to implement electrical connection between the multiple battery cells 20.

In some embodiments, the housing 210 may be made of aluminum, aluminum alloy, or other metal materials, so that the battery 100 has higher force-bearing performance.

In some other embodiments, the housing 210 may alternatively be made of non-metal materials with high strength such as carbon fiber or hard plastic, which can reduce the possibility of short circuits between multiple battery cells 20.

In some embodiments, the electrode terminal 230 may be made of metal materials such as silver-plated copper, zinc-plated copper, copper, aluminum, or iron, which can play a role in conduction and transmission of electrical signals.

In some embodiments, the electrode terminal 230 may be provided in a cuboid shape.

In some other embodiments, the electrode terminal 230 may alternatively be provided in shapes such as a cylinder or an elliptical cylinder.

In some embodiments, the sealing member 240 is disposed around the through hole 2111, allowing for better sealing performance between the electrode terminal 230 and the first wall 211.

In some embodiments, the sealing member 240 may be made of a material such as silicone, rubber, or plastic, which has good sealing effect and insulating effect, and can reduce the possibility of short circuits between the electrode terminal 230 and the housing 210.

The housing 210 has an accommodating space, and the electrode assembly 220 is disposed in the accommodating space, so that the housing 210 can protect the electrode assembly 220. The first wall 211 of the housing 210 is provided with a through hole 2111, and the electrode terminal 230 is disposed in the through hole 2111, so that the electrode assembly 220 can be electrically connected to other mechanisms through the electrode terminal 230. The first conductive portion 231 of the electrode terminal 230 is disposed on a side of the first wall 211 facing the accommodating space, and the sealing member 240 is disposed between the electrode terminal 230 and the first wall 211. In this way, when the exterior of the housing 210 is subjected to force, the first wall 211 and the electrode terminal 230 can deform together, and the sealing member 240 located between the electrode terminal 230 and the first wall 211 is not prone to have gaps formed with the first wall 211 and with the electrode terminal 230, thereby allowing the sealing member 240 to maintain good sealing performance with the first wall 211 and with the electrode terminal 230, reducing the possibility of leakage from the battery cell 20, and thus reducing the possibility of battery cell failure and pollution or corrosion of other mechanisms (not shown in the figures).

In some embodiments, a thickness direction X of the first wall, a length direction Y of the first wall, and a width direction Z of the first wall are perpendicular to each other.

In some embodiments, the first conductive portion 231 is provided in a flat-plate shape.

The first conductive portion 231 being provided in a flat-plate shape can be understood in a general sense, that is, the first conductive portion 231 has a first surface and a second surface opposite each other in the thickness direction X of the first wall, and when the first surface and the second surface are parallel to or have angles less than a preset angle with a plane perpendicular to the thickness direction of the first wall (Y-Z plane), it can be understood that the first conductive portion 231 is provided in a flat-plate shape.

The first conductive portion 231 being provided in a flat-plate shape can make the first conductive portion 231 better fit with the sealing member 240, thereby allowing for better sealing performance between the sealing member 240 and the first conductive portion 231, further reducing the possibility of leakage from the battery cell 20, and thus reducing the possibility of failure of the battery cell 20 and pollution or corrosion of other mechanisms.

In some embodiments, in a direction perpendicular to the thickness direction of the first wall 211 (a direction parallel to the Y-Z plane), a size S1 of the first conductive portion 231 is larger than a size S2 of the through hole 2111.

In some embodiments, the first conductive portion 231 may be rectangular, and the size S1 of the first conductive portion 231 in the direction perpendicular to the thickness direction of the first wall 211 may be a length or width of the first conductive portion 231.

In some other embodiments, the first conductive portion 231 may alternatively be circular, and the size S1 of the first conductive portion 231 in the direction perpendicular to the thickness direction of the first wall 211 is a diameter of the first conductive portion 231.

In some other embodiments, the first conductive portion 231 may alternatively be elliptical, racetrack-shaped, or of other shapes, and the size S1 of the first conductive portion 231 in the direction perpendicular to the thickness direction of the first wall 211 may be a size of the first conductive portion 231 in the length direction Y of the first wall, or a size in the width direction Z of the first wall.

In some embodiments, the through hole 2111 may be rectangular, and the size S2 of the through hole 2111 in the direction perpendicular to the thickness direction of the first wall 211 may be a length or width of the through hole 2111.

In some other embodiments, the through hole 2111 may alternatively be circular, and the size S2 of the through hole 2111 in the direction perpendicular to the thickness direction of the first wall 211 is a diameter of the through hole 2111.

In some other embodiments, the through hole 2111 may alternatively be elliptical, racetrack-shaped, or of other shapes, and the size S2 of the through hole 2111 in the direction perpendicular to the thickness direction of the first wall 211 may be a size of the through hole 2111 in the length direction Y of the first wall, or a size in the width direction Z of the first wall.

The size of the first conductive portion 231 is made to be larger than the size of the through hole 2111 in the direction perpendicular to the thickness direction of the first wall 211, so that the first conductive portion 231 can cover the through hole 2111, thereby allowing for better sealing performance between the first conductive portion 231 and the housing 210, further reducing the possibility of leakage from the battery cell 20, and thus reducing the possibility of failure of the battery cell 20 and pollution or corrosion of other mechanisms.

In some embodiments, in the thickness direction X of the first wall 211, the sealing member 240 is located between the first conductive portion 231 and the first wall 211.

In the thickness direction of the first wall 211, an overlapping area of a projection of the sealing member 240 and a projection of the first wall 211 is large. In this case, making the sealing member 240 located between the first conductive portion 231 and the first wall 211 in the thickness direction of the first wall 211 allows the sealing member 240 to have a larger size in the direction perpendicular to the thickness direction of the first wall 211 (the direction parallel to the Y-Z plane), and to be attached to the first conductive portion 231 and the first wall 211 separately, that is, allowing for larger sealing area between the sealing member 240 and the first conductive portion 231 and/or larger sealing area between the sealing member 240 and the first wall 211, thereby making the sealing performance between the sealing member 240 and the first conductive portion 231 and/or the first wall 211 better. In addition, when the first wall 211 is subjected to force, the sealing member 240 is pressed in the thickness direction of the first wall 211, which can further improve the sealing performance between the sealing member 240 and the first conductive portion 231 as well as the first wall 211, thereby further reducing the possibility of leakage from the battery cell 20, and thus reducing the possibility of failure of the battery cell 10 and pollution or corrosion of other mechanisms.

In some other embodiments, the sealing member 240 may alternatively be at least partially disposed in the through hole 2111, which can improve the insulation effect between the electrode terminal 230 and the housing 210.

In some other embodiments, the sealing member 240 may alternatively be at least partially disposed on a sidewall of the first conductive portion 231 in the direction perpendicular to the thickness direction of the first wall 211 (the direction parallel to the Y-Z plane).

Referring to FIG. 6, in some embodiments, in the direction perpendicular to the thickness direction of the first wall 211 (the direction parallel to the Y-Z plane), a distance between a sidewall of the through hole 2111 and a sidewall of the first conductive portion 231 is D1, satisfying D1 ≥ 2 mm. For example, D1 may be 2 mm, 2.5 mm, or 3 mm.

The distance D1 between a sidewall of the through hole 2111 and a sidewall of the first conductive portion 231 in the direction perpendicular to the thickness direction of the first wall 211 (the direction parallel to the Y-Z plane) is made to satisfy D1 ≥ 2 mm, so that the first conductive portion 231 can better cover the through hole 2111, allowing for better sealing performance between the first conductive portion 231 and the first wall 211. In the thickness direction of the first wall 211, an overlapping area of a projection of the first conductive portion 231 and a projection of the first wall 211 is large, which facilitates the disposition of the sealing member 240 between the electrode terminal 230 and the first wall 211.

In some embodiments, in the thickness direction X of the first wall 211, a thickness of the first conductive portion 231 is H1, satisfying H1 ≥ 1 mm. For example, H1 may be 1 mm, 1.5 mm, or 2 mm.

The thickness H1 of the first conductive portion 231 in the thickness direction X of the first wall 211 is made to satisfy H1 ≥ 1 mm, so that the first conductive portion 231 is not prone to deformation and gaps are not prone to be formed between the first conductive portion 231 and the sealing member 240, maintaining good sealing performance between the sealing member 240 and the first conductive portion 231, reducing the possibility of leakage from the battery cell 20, and thus reducing the possibility of failure of the battery cell 20 and pollution or corrosion of other mechanisms.

Referring to FIG. 7, FIG. 7 is a sectional view of a partial structure of a battery cell according to some other embodiments of this application.

In some other embodiments, the electrode terminal 230 further includes a second conductive portion 232, where the second conductive portion 232 is connected to the first conductive portion 231, and the second conductive portion 232 is disposed through the through hole 2111.

In some embodiments, the first conductive portion 231 and the second conductive portion 232 are integrally formed.

In some other embodiments, the first conductive portion 231 and the second conductive portion 232 may alternatively be separately disposed and connected by welding, adhesion, or the like.

In some embodiments, a cross section of the second conductive portion 232 on a plane perpendicular to the thickness direction of the first wall 211 (Y-Z plane) may be rectangular, and a line connecting the geometric center of the second conductive portion 232 and the geometric center of the first conductive portion 231 is parallel to the thickness direction X of the first wall.

In some other embodiments, the cross section of the second conductive portion 232 on the plane perpendicular to the thickness direction of the first wall 211 (Y-Z plane) may alternatively be circular, elliptical, racetrack-shaped, or the like.

The electrode terminal 230 further includes a second conductive portion 232, where the second conductive portion 232 is connected to the first conductive portion 231, and the second conductive portion 232 is disposed through the through hole 2111. In this way, a portion of the second conductive portion 232 is exposed on a side of the first wall 211 facing away from the accommodating space, thereby facilitating connection of other mechanisms to the second conductive portion 232 to achieve electrical connection with the electrode assembly 220.

In some embodiments, the battery cell 20 further includes a connecting member 250, where the connecting member 250 connects the first conductive portion 231 and the first wall 211.

In some embodiments, the connecting member 250 may be made of aluminum, aluminum alloy, or other metal materials, and the connecting member 250 may be connected to the first conductive portion 231 and the first wall 211 by welding, allowing for stronger connection force between the first conductive portion 231 and the first wall 211. When the first wall 211 deforms under force, the possibility of gaps formed between the first conductive portion 231 and the sealing member 240 as well as between the first wall 211 and the sealing member 240 is smaller, thereby allowing for better sealing performance of the battery cell 20. Such connecting members 250 are suitable for battery cells 20 having a housing 210 with charge.

In some other embodiments, the connecting member 250 may alternatively be made of materials with specified strength and insulation such as plastic, and the connecting member 250 may be connected to the first conductive portion 231 and the first wall 211 by adhesion, snapping, or the like, allowing for good connection force between the first conductive portion 231 and the first wall 211, and enabling insulation between the first conductive portion 231 and the first wall 211. Such connecting members 250 are suitable for battery cells 20 having a housing 210 without charge.

Since the second conductive portion 232 is disposed through the through hole 2111, when the battery cell 20 is subjected to collision, the second conductive portion 232 may be directly subjected to force. With the disposition of the connecting member 250 and the connecting member 250 connecting the first conductive portion 231 and the first wall 211, when the second conductive portion 232 is subjected to force, the external force can be transmitted to the first wall 211 through the connecting member 250, so that the first wall 211 can deform together with the second conductive portion 232, and the sealing member 240 located between the electrode terminal 230 and the first wall 211 is not prone to have gaps formed with the first wall 211 and the electrode terminal 230, thereby allowing the sealing member 240 to maintain good sealing performance with the first wall 211 and with the electrode terminal 230, reducing the possibility of leakage from the battery cell 20, and thus reducing the possibility of failure of the battery cell 20 and pollution or corrosion of other mechanisms.

In some embodiments, in the thickness direction X of the first wall 211, the connecting member 250 is located between the first conductive portion 231 and the first wall 211.

Since a sealing member 240 is disposed between the first conductive portion 231 and the first wall 211, there is a gap space between the first conductive portion 231 and the first wall 211. In the thickness direction X of the first wall 211, the connecting member 250 is located between the first conductive portion 231 and the first wall 211, that is, the connecting member 250 can be disposed in the gap space that already exists, thereby making the space occupied by the overall structure composed of the electrode terminal 230, the sealing member 240, and the connecting member 250 smaller, so that more space in the accommodating space can be used for accommodating the electrode assembly 220, which helps enhancing the energy density of the battery cell 20.

In some embodiments, the connecting member 250 is disposed around the sealing member 240.

The connecting member 250 is disposed around the sealing member 240, that is, the connecting member 250 is closer to the outer side of the first conductive portion 231 in the direction perpendicular to the thickness direction of the first wall (the direction parallel to the Y-Z plane). When directly subjected to force, the electrode terminal 230 acts on the first wall 211 through the connecting member 250, so that the first wall 211 deforms to a smaller extent, thereby making the possibility of gaps formed between the first wall 211 and the sealing member 240 as well as between the electrode terminal 230 and the sealing member 240 due to deformation smaller, and allowing for better sealing performance between the first wall 211 and the sealing member 240 as well as between the electrode terminal 230 and the sealing member 240.

In some embodiments, the connecting member 250 is provided in an annular shape, allowing for larger connection areas between the connecting member 250 and the first wall 211 as well as between the connecting member 250 and the first conductive portion 231, and for higher connection strength, thereby making the connection between the first conductive portion 231 and the first wall 211 more stable. The connecting member 250 can prevent an electrolyte in the accommodating space from contacting the sealing member 240, thereby reducing the possibility of the electrolyte corroding the sealing member 240, prolonging the service life of the sealing member 240, and making the sealing member 240 maintain good sealing effect.

In some other embodiments, the connecting members 250 may be provided in plurality, and the plurality of connecting members 250 are disposed at intervals in the circumferential direction of the sealing member 240, allowing for higher connection strength between the connecting member 250 and the first wall 211 as well as between the connecting member 250 and the first conductive portion 231.

In some embodiments, in the thickness direction X of the first wall 211, the second conductive portion 232 exceeds a side of the first wall 211 facing away from the accommodating space.

In the thickness direction of the first wall 211, the second conductive portion 232 exceeds the side of the first wall 211 facing away from the accommodating space, which can further facilitate connection of other mechanisms to the second conductive portion 232 to achieve electrical connection with the electrode assembly 220.

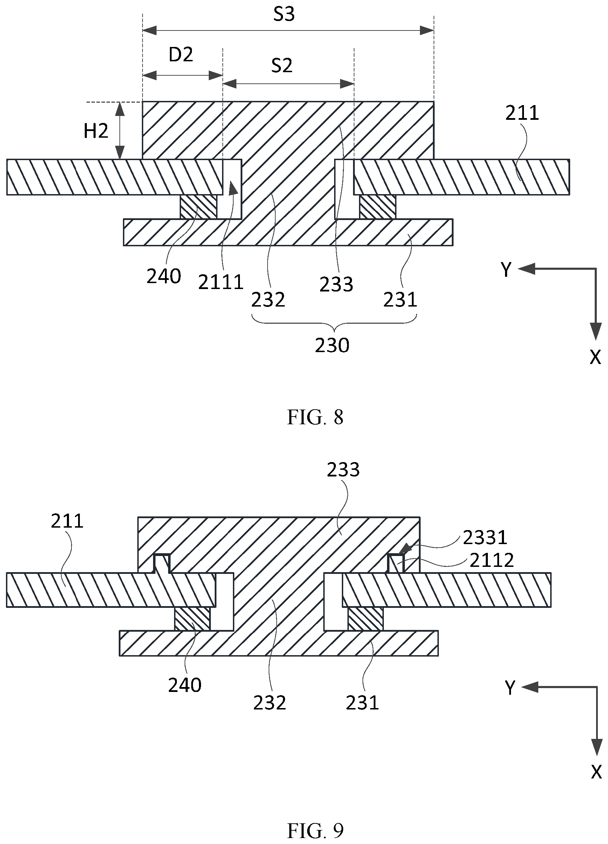

Referring to FIG. 8, FIG. 8 is a schematic diagram of a partially enlarged structure at location B in the battery cell in FIG. 5.

In some other embodiments, the electrode terminal 230 further includes a third conductive portion 233, where the third conductive portion 233 is disposed on the side of the first wall 211 facing away from the accommodating space, and the third conductive portion 233 is connected to the second conductive portion 232.

In some embodiments, the third conductive portion 233 and the second conductive portion 232 are integrally formed.

In some other embodiments, the third conductive portion 233 and the second conductive portion 232 may alternatively be separately disposed and connected by welding, adhesion, or the like.

In some embodiments, a cross section of the third conductive portion 233 on a plane perpendicular to the thickness direction of the first wall 211 (Y-Z plane) may be rectangular, and a line connecting the geometric center of the third conductive portion 233 and the geometric center of the second conductive portion 232 is parallel to the thickness direction X of the first wall.

In some other embodiments, the cross section of the third conductive portion 233 on the plane perpendicular to the thickness direction of the first wall 211 (Y-Z plane) may alternatively be circular, elliptical, racetrack-shaped, or the like.

The electrode terminal 230 further includes a third conductive portion 233, where the third conductive portion 233 is disposed on the side of the first wall 211 facing away from the accommodating space, and the third conductive portion 233 is connected to the second conductive portion 232, which can facilitate connection of other mechanisms to the third conductive portion 233 to achieve electrical connection with the electrode assembly 220.

In some embodiments, in the direction perpendicular to the thickness direction of the first wall 211 (the direction parallel to the Y-Z plane), a size S3 of the third conductive portion 233 is larger than a size S2 of the through hole 2111.

In some embodiments, the third conductive portion 233 may be rectangular, and the size S3 of the third conductive portion 233 in the direction perpendicular to the thickness direction of the first wall 211 may be a length or width of the third conductive portion 233.

In some other embodiments, the third conductive portion 233 may alternatively be circular, and the size S3 of the third conductive portion 233 in the direction perpendicular to the thickness direction of the first wall 211 is a diameter of the third conductive portion 233.

In some other embodiments, the third conductive portion 233 may alternatively be elliptical, racetrack-shaped, or of other shapes, and the size S3 of the third conductive portion 233 in the direction perpendicular to the thickness direction of the first wall 211 may be the size of the third conductive portion 233 in the length direction Y of the first wall, or the size in the width direction Z of the first wall.

In the direction perpendicular to the thickness direction of the first wall 211 (the direction parallel to the Y-Z plane), the size S3 of the third conductive portion 233 is larger than the size S2 of the through hole 2111, so that the third conductive portion 233 can cover the through hole 2111, thereby allowing for better sealing performance between the third conductive portion 233 and the housing 210, further reducing the possibility of leakage from the battery cell 20, and thus reducing the possibility of battery cell failure and pollution or corrosion of other mechanisms. In addition, the third conductive portion 233 can abut against and limit the first wall 211 in the thickness direction of the first wall 211, so that the first conductive portion 231 can press the sealing member 240 in the thickness direction of the first wall 211, which can further improve the sealing performance between the first conductive portion 231 and the first wall 211, thereby further reducing the possibility of leakage from the battery cell 20, and thus reducing the possibility of battery cell failure and pollution or corrosion of other mechanisms.

In some embodiments, in the direction perpendicular to the thickness direction of the first wall 211 (the direction parallel to the Y-Z plane), a distance between the sidewall of the through hole 2111 and a sidewall of the third conductive portion 233 is D2, satisfying D2 ≥ 1 mm. For example, D2 may be 1 mm, 1.7 mm, or 2.2 mm.

The distance D2 between the sidewall of the through hole 2111 and the sidewall of the third conductive portion 233 in the direction perpendicular to the thickness direction of the first wall 211 (a direction parallel to the Y-Z plane) is made to satisfy D2 ≥ 1 mm, so that the third conductive portion 233 can better cover the through hole 2111, making the sealing performance between the third conductive portion 233 and the first wall 211 better.

In some embodiments, in the thickness direction of the first wall 211, a thickness of the third conductive portion 233 is H2, satisfying H2 ≥ 1 mm. For example, H2 may be 1 mm, 1.8 mm, or 2.3 mm.

The thickness H2 of the third conductive portion 233 in the thickness direction X of the first wall 211 is made to satisfy H2 ≥ 1 mm, so that the third conductive portion 233 is not prone to deformation and gaps are not prone to be formed between the third conductive portion 233 and the first wall 211, maintaining good sealing performance between the first wall 211 and the first conductive portion 231, reducing the possibility of leakage from the battery cell 20, and thus reducing the possibility of failure of the battery cell 20 and pollution or corrosion of other mechanisms.

In some embodiments, the battery cell 20 may further include a second sealing member (not shown in the figure), where the second sealing member is disposed between the third conductive portion 233 and the first wall 211, allowing for better sealing performance between the third conductive portion 233 and the first wall 211.

In some embodiments, in the thickness direction X of the first wall 211, the second sealing member is located between the third conductive portion 233 and the first wall 211, allowing the second sealing member to have a larger size in the direction perpendicular to the thickness direction of the first wall 211 (the direction parallel to the Y-Z plane), and to be attached to the third conductive portion 233 and the first wall 211 respectively, that is, allowing for larger sealing area between the second sealing member and the third conductive portion 233 and/or larger sealing area between the second sealing member and the first wall 211, thereby making the sealing performance between the second sealing member and the third conductive portion 233 and/or the first wall 211 better. In addition, when the first wall 211 is subjected to force, the second sealing member is pressed in the thickness direction of the first wall 211, which can further improve the sealing performance between the second sealing member and the third conductive portion 233 as well as the first wall 211, thereby further reducing the possibility of leakage from the battery cell 20, and thus reducing the possibility of failure of the battery cell 10 and pollution or corrosion of other mechanisms.

In some other embodiments, the second sealing member may alternatively be at least partially disposed in the through hole 2111, which can improve the insulation effect between the electrode terminal 230 and the housing 210.

In some other embodiments, the second sealing member may alternatively be at least partially disposed on a sidewall of the third conductive portion 233 in the direction perpendicular to the thickness direction of the first wall 211 (the direction parallel to the Y-Z plane).

In some embodiments, the second sealing member is disposed around the through hole 2111, which can make the sealing performance between the electrode terminal 230 and the first wall 211 better.

In some embodiments, the second sealing member may be made of a material such as silicone, rubber, or plastic, which has good sealing effect and insulating effect, and can reduce the possibility of short circuits between the electrode terminal 230 and the housing 210.

In some embodiments, in the thickness direction X of the first wall 211, the sealing member 240 is in interference fit with the first conductive portion 231 and the first wall 211.

The sealing member 240 is made to be in interference fit with the first conductive portion 231 and the first wall 211 in the thickness direction X of the first wall 211, so that the sealing member 240 can have better sealing performance with the first conductive portion 231 and with the first wall 211, further reducing the possibility of leakage from the battery cell 20, and thus reducing the possibility of battery cell failure and pollution or corrosion of other mechanisms.

Referring to FIG. 9, FIG. 9 is a sectional view of a partial structure of a battery cell according to some other embodiments of this application.

In some embodiments, the electrode terminal 230 is provided with a limiting portion, and the first wall 211 is provided with a matching portion, where the limiting portion fits with the matching portion to limit movement of the electrode terminal 230 relative to the first wall 211 along the direction perpendicular to the thickness direction of the first wall 211.

The electrode terminal 230 is provided with the limiting portion, the first wall 211 is provided with the matching portion, and the limiting portion fits with the matching portion, so that movement of the electrode terminal 230 relative to the first wall 211 along the direction perpendicular to the thickness direction of the first wall 211 can be limited. In this way, when the electrode terminal 230 or the first wall 211 is subjected to force, the electrode terminal 230 is not prone to move relative to the first wall 211, thereby maintaining good sealing performance between the electrode terminal 230 and the first wall 211. When subjected to force in its thickness direction, the first wall 211 deforms, causing the sidewalls of the through hole 2111 to move away from each other. With the limiting portion and the matching portion provided, when the sidewalls of the through hole 2111 move away from each other, the electrode terminal 230 can generate a pulling force on the first wall 211 in the direction perpendicular to the thickness direction of the first wall 211, so that the first wall 211 deforms to a smaller extent, thereby reducing the possibility of gaps formed between the first wall 211 and the electrode terminal 230 due to deformation, and further improving the sealing performance between the first wall 211 and the electrode terminal 230.

In some embodiments, the limiting portion is a depression 2331, and the matching portion is a protrusion 2112.

In some embodiments, the depression 2331 is disposed on the third conductive portion 233, which facilitates fitting of the depression 2331 with the protrusion 2112.

In some other embodiments, the depression 2331 may alternatively be disposed on the second conductive portion 232.

In some other embodiments, the limiting portion may alternatively be a protrusion, and the matching portion may be a depression.

One of the limiting portion and the matching portion is a protrusion, and the other is a depression, which allows for a simple structure, easy preparation, and good limiting effect between the first wall 211 and the electrode terminal 230.

Referring to FIG. 3, in some embodiments, the housing 210 includes a housing body 212 and an end cover, where the housing body 212 has an opening, the end cover closes the opening, and the first wall 211 is the end cover.

The housing 210 includes a housing body 212 and an end cover, where the housing body 212 has an opening, the end cover is plate-shaped, the end cover closes the opening, the housing body 212 and the end cover jointly define an accommodating space for accommodating the electrode assembly 220 and an electrolyte, and the first wall 211 is the end cover, facilitating the preparation of the through hole 2111.

In some other embodiments, the housing body 212 and the end cover may both be hollow structures with one side open, and the opening side of the end cover covers the opening side of the housing body 212 to jointly form the accommodating space.

In some embodiments, the housing body 212 and the end cover may be connected by welding.

In some other embodiments, the housing body 212 and the end cover may alternatively be fixedly connected by adhesion, interference fit, or the like.

In some embodiments, the housing 210 may be a cuboid.

In some other embodiments, the housing 210 may alternatively be a cylinder.

Some embodiments of this application provide a battery, including the battery cell 20 described in any one of the foregoing solutions.

Some embodiments of this application provide an electric apparatus, including the battery 100 described in any one of the foregoing solutions, where the battery 100 is configured to supply electrical energy.

The electric apparatus may be any of the aforementioned systems or devices using the battery 100.

Referring to FIG. 3 to FIG. 5 and FIG. 9, some embodiments of this application provide a battery cell 20. The battery cell 20 includes a housing 210, an electrode assembly 220, an electrode terminal 230, and a sealing member 240. The housing 210 has an accommodating space and includes a first wall 211. The first wall 211 is provided with a through hole 2111. The electrode assembly 220 is disposed in the accommodating space. The first wall 211 is configured to support the electrode assembly 220. The electrode terminal 230 is disposed in the through hole 2111. The electrode terminal 230 includes a first conductive portion 231, a second conductive portion 232, and a third conductive portion 233. The first conductive portion 231 is disposed on a side of the first wall 211 facing the accommodating space. The second conductive portion 232 is connected to the first conductive portion 231. The second conductive portion 232 is disposed through the through hole 2111. The third conductive portion 233 is disposed on a side of the first wall 211 facing away from the accommodating space. The third conductive portion 233 is connected to the second conductive portion 232. The sealing member 240 is disposed between the electrode terminal 230 and the first wall 211.

In a direction perpendicular to the thickness direction of the first wall 211 (a direction parallel to the Y-Z plane), a size S1 of the first conductive portion 231 is larger than a size S2 of the through hole 2111, and a size S3 of the third conductive portion 233 is larger than a size S2 of the through hole 2111.

In the thickness direction X of the first wall 211, the sealing member 240 is located between the first conductive portion 231 and the first wall 211.

In the thickness direction X of the first wall 211, the sealing member 240 is in interference fit with the first conductive portion 231 and the first wall 211.

In the direction perpendicular to the thickness direction of the first wall 211 (the direction parallel to the Y-Z plane), a distance between a sidewall of the through hole 2111 and a sidewall of the first conductive portion 231 is D1, satisfying D1 ≥ 2 mm, and a distance between the sidewall of the through hole 2111 and the sidewall of the third conductive portion 233 is D2, satisfying D2 ≥ 1 mm.

In the thickness direction X of the first wall 211, a thickness of the first conductive portion 231 is H1, satisfying H1 ≥ 1 mm, and a thickness of the third conductive portion 233 is H2, satisfying H2 ≥ 1 mm.

The electrode terminal 230 is provided with a depression 2331, and the first wall 211 is provided with a protrusion 2112, where the depression 2331 fits with the protrusion 2112 to limit movement of the electrode terminal 230 relative to the first wall 211 along the direction perpendicular to the thickness direction of the first wall 211.

The housing 210 includes a housing body 212 and an end cover, where the housing body 212 has an opening, the end cover closes the opening, and the first wall 211 is the end cover.

It should be noted that in absence of conflicts, the embodiments and features in the embodiments in this application may be combined with each other.

The foregoing descriptions are merely preferred embodiments of this application, but are not intended to limit this application. Persons skilled in the art understand that this application may have various modifications and variations. Any modification, equivalent replacement, and improvement made without departing from the spirit and principle of this application shall fall within the protection scope of this application.

## Claims

1. A battery cell, comprising:
a housing, having an accommodating space, wherein the housing comprises a first wall, and the first wall is provided with a through hole;
an electrode assembly, disposed in the accommodating space, wherein the first wall is configured to support the electrode assembly;
an electrode terminal, disposed in the through hole, wherein the electrode terminal comprises a first conductive portion, and the first conductive portion is disposed on a side of the first wall facing the accommodating space; and
a sealing member, disposed between the electrode terminal and the first wall.

2. The battery cell according to claim 1, wherein the first conductive portion is provided in a flat-plate shape.

3. The battery cell according to claim 2, wherein in a direction perpendicular to a thickness direction of the first wall, a size of the first conductive portion is larger than a size of the through hole.

4. The battery cell according to any one of claims 1 to 3, wherein in the thickness direction of the first wall, the sealing member is located between the first conductive portion and the first wall.

5. The battery cell according to any one of claims 1 to 3, wherein in the direction perpendicular to the thickness direction of the first wall, a distance between a sidewall of the through hole and a sidewall of the first conductive portion is D1, satisfying D1 ≥ 2 mm.

6. The battery cell according to any one of claims 1 to 3, wherein in the thickness direction of the first wall, a thickness of the first conductive portion is H1, satisfying H1 ≥ 1 mm.

7. The battery cell according to any one of claims 1 to 3, wherein the electrode terminal further comprises a second conductive portion, the second conductive portion being connected to the first conductive portion, and the second conductive portion being disposed through the through hole.

8. The battery cell according to claim 7, wherein the battery cell further comprises a connecting member, the connecting member connecting the first conductive portion and the first wall.

9. The battery cell according to claim 8, wherein in the thickness direction of the first wall, the connecting member is located between the first conductive portion and the first wall.

10. The battery cell according to claim 8, wherein the connecting member is disposed around the sealing member.

11. The battery cell according to any one of claims 7 to 10, wherein in the thickness direction of the first wall, the second conductive portion exceeds a side of the first wall facing away from the accommodating space.

12. The battery cell according to any one of claims 5 to 11, wherein the electrode terminal further comprises a third conductive portion, the third conductive portion being disposed on the side of the first wall facing away from the accommodating space, and the third conductive portion being connected to the second conductive portion.

13. The battery cell according to claim 12, wherein in the direction perpendicular to the thickness direction of the first wall, a size of the third conductive portion is larger than the size of the through hole.

14. The battery cell according to claim 12, wherein in the direction perpendicular to the thickness direction of the first wall, a distance between the sidewall of the through hole and a sidewall of the third conductive portion is D2, satisfying D2 ≥ 1 mm.

15. The battery cell according to claim 12, wherein in the thickness direction of the first wall, a thickness of the third conductive portion is H2, satisfying H2 ≥ 1 mm.

16. The battery cell according to any one of claims 1 to 15, wherein in the thickness direction of the first wall, the sealing member is in interference fit with the first conductive portion and the first wall.

17. The battery cell according to any one of claims 1 to 15, wherein the electrode terminal is provided with a limiting portion, and the first wall is provided with a matching portion, with the limiting portion fitting with the matching portion to limit movement of the electrode terminal relative to the first wall along the direction perpendicular to the thickness direction of the first wall.

18. The battery cell according to claim 17, wherein one of the limiting portion and the matching portion is a protrusion, and the other is a depression.

19. The battery cell according to any one of claims 1 to 18, wherein the housing comprises a housing body and an end cover, the housing body having an opening, the end cover closing the opening, and the first wall being the end cover.

20. A battery, comprising the battery cell according to any one of claims 1 to 19.

21. An electric apparatus, comprising the battery according to claim 20, wherein the battery is configured to supply electrical energy.
